# EUROPÄISCHE PATENTANMELDUNG

(11) **EP 1 190 912 A1**
(43) Veröffentlichungstag der Anmeldung: **27.03.2002**
(21) Anmeldenummer: 00120778.6
(22) Anmeldetag: 22.09.2000
(51) Int. Cl.: B60R 16/02

(54) **Dichte elektrische Leitungsdurchführung und Verfahren zu dessen Herstellung**

(71) Anmelder: SIEMENS AKTIENGESELLSCHAFT, 80333 München (DE)
(72) Erfinder: Puchegger, Karl, 2630 Ternitz (AT)

(57) **Zusammenfassung**

Zur Minderung des Material- und Fertigungsaufwandes für eine dichte elektrische Leitungsdurchführung durch die Wandung eines Gehäuses (1) sind elektrische Leiterbahnen (3.1) in einem flexiblen Leiterbahnträger (3) aus Polyster eingebettet; der Leiterbahnträger (3) ist über eine Leiterbahnträger-Dichtung (2) aus einem Thermoplast in einer eigenen Durchführungs-Öffnung (1.1) in der Wandung des aus einem Polyamid gefertigten Gehäuses (1) eingespritzt.

## Beschreibung

Die Erfindung bezieht sicht auf eine dichte elektrische Leitungsdurchführung gemäß Patentanspruch 1 und ein Verfahren zu dessen Herstellung gemäß Patentanspruch 7.

In Kraftfahrzeugen, insbesondere bei Getriebemotor-Antrieben für Fensterheber- bzw. Schiebedächer oder dergleichen, besteht zunehmend die Anforderung, eine in einem Gehäuse untergebrachte Steuerelektronik am Motor und/oder Getriebe anzubringen und zu verbinden. Dabei muss die auf einen Schaltungsträger aufgebrachte Steuerelektronik gegenüber den in Motoren und Getrieben verwendeten Ölen, die chemisch höchst aggressive Additive enthalten, abgeschirmt werden. Zugleich müssen aber elektrische Leitungen durch die Abschirmung hindurchgeführt werden, um Komponenten des Motors oder des Getriebes über die Steuerelektronik steuern und versorgen zu können.

Eine Verbindungsanordnung, die für derartige Bedingungen an sich tauglich ist, ist aus der Patentschrift EP 0 513 263 B1 bekannt. Eine flexible Folie, die Leiterbahnen trägt, ist zwischen einem Verschlussträger und einem Gehäuse hindurchgeführt und stellt eine elektrische Verbindung zwischen einem Bauteil im Inneren des Gehäuses und einem Bauteil außerhalb des Gehäuses her. Um eine Abdichtung zwischen der flexiblen Folie und dem Verschlussteil oder dem Gehäuse zu erzielen, muss die flexible Folie mit einer Dichtung umgeben werden. Die Abdichtung des Verschlussteils gegenüber dem Gehäuse und der Folie ist dabei verhältnismäßig aufwendig bzw. nicht mit Sicherheit in allen Fällen gewährleistbar.

Zur Vereinfachung des Fertigungs- und Montageprozesses ist es durch die DE 197 42 178 C1 bekannt, den Leiterbahnträger unmittelbar in die Gehäusewand einzuspritzen, durch welche die Leiterbahnen hindurch zuführen sind; dabei können Probleme durch eine zu hohe Wärmebelastung des Trägermaterials entstehen, die u.U. teilweise durch Wahl eines entsprechend wärmefesteren, jedoch kostenintensiveren Materials, wie z.B. Polyamid, umgangen werden könnten.

Gemäß Aufgabe vorliegender Erfindung soll mit geringem Material- und Fertigungsaufwand eine Leitungsdurchführung durch die Wand eines Gehäuses geschaffen werden, die eine zuverlässige, auch bei langen Betriebsstandzeiten noch wirksame Abdichtung des, vorzugsweise mit einem Gehäusedeckel zu verschließenden, Gehäuses gewährleistet.

Diese Aufgabe kann erfindungsgemäß durch eine dichte Leitungsdurchführung gemäß Anspruch 1 bzw. ein Verfahren zu dessen Herstellung gemäß Patentanspruch 7 erreicht werden; vorteilhafte Ausgestaltungen der Leitungsdurchführung sind Gegenstand der Ansprüche 2 bis 6.

Bei der Herstellung der erfindungsgemäßen Leitungsdurchführung kann einerseits die Massetemperatur des Dichtungsmaterials niedriger gehalten werden als die des zuvor spritzgießbaren Gehäuses und dadurch ein kostengünstiges Material niedrigerer Temperaturfestigkeit, insbesondere ein Thermoplast, gewählt und andererseits eine hohe Dichtigkeit zwischen einem öffnungsseitigen Gehäuserand und einem aufzulegenden Gehäusedeckel gewährleistet werden ,da die zwischenliegende Dichtungsauflage wegen des Fehlens der in einer eigenen gesonderten Durchführungsöffnung eingegossenen Leiterbahnen über ihre gesamte Dichtfläche eine hohe Homogenität aufweist; durch die Möglichkeit der gleichzeitigen Ein- bzw. Anspritzung des Leiterbahnträgers und der Dichtung bzw. der Dichtungsauflage in einem Prozessschritt sowie der Spritzmöglichkeit des formenkomplizierten Gehäuses ohne gleichenzeitiges Einspritzen des Leiterbahnträgers ergibt sich eine wesentliche, insbesondere für eine Automatenfertigung eines Massenserienartikels vorteilhafte, Minderung des Fertigungsaufwandes.

Die Erfindung sowie weitere vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: in perspektivischer Darstellung ein topfförmiges Elektronikgehäuse mit aus dessen nach oben gerichteter Bodenfläche durch eine Durchführungsöffnung dichtend herausgeführtem Leiterbahnträger mit eingebetteten Leiterbahnen;
- FIG 2: in perspektivischer Darstellung das topfförmige Elektronikgehäuse gemäß FIG 1 mit nach oben gerichteter Topfrandseite mit Dichtungsauflage zur Abdichtung gegenüber einem zum dichten Verschluss auflegbaren Gehäusedeckel;
- FIG 3: die Draufsicht auf das Elektronikgehäuse gemäß FIG 1;2;
- FIG 4: ein Schnittbild des Elektronikgehäuses gemäß Schnittverlauf IV-IV.

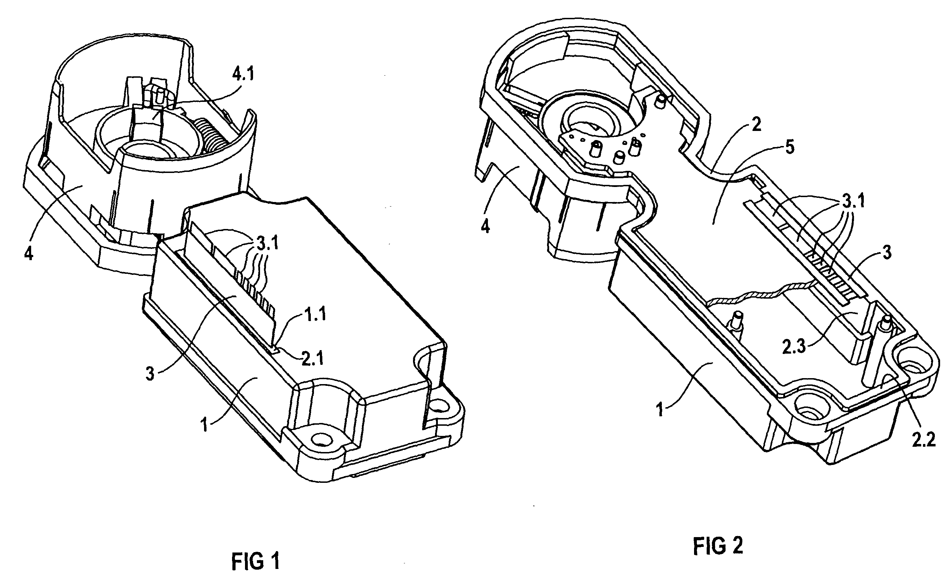

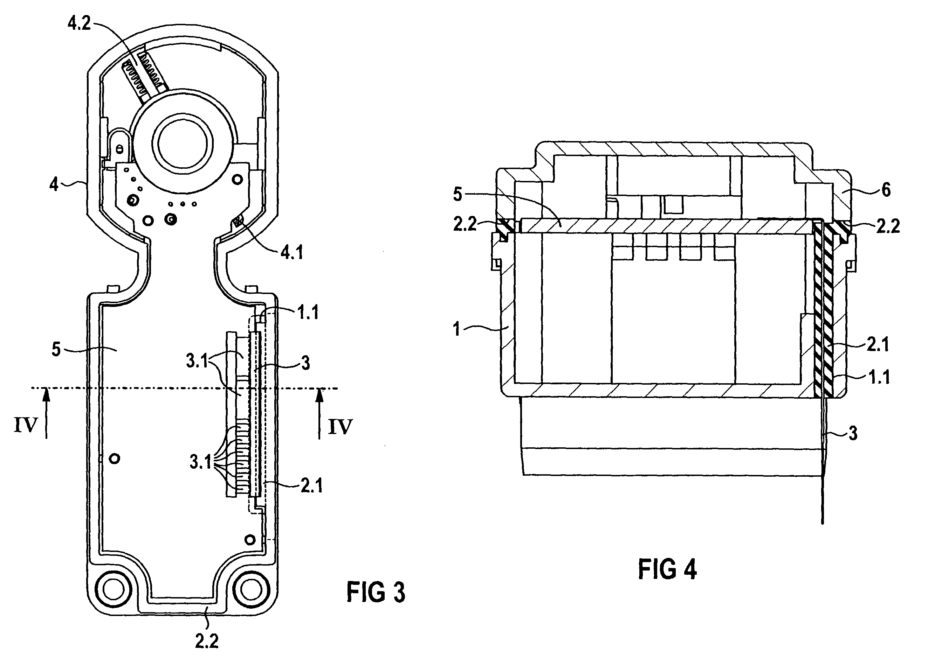

FIG 1 bis 4 zeigen ein topfförmiges aus einem Polyamid-Kunststoff gespritztes Gehäuse 1 zur Aufnahme einer Steuerelektronik, die von einer ausschnittsweise angedeuteten, innerhalb des Gehäuses 1 fixierten Leiterplatte 5 aufgenommen wird. Mit dem Gehäuse 1 ist eine Bürstentraganordnung 4 mit darin angeordneten Bürsten 4.1;4.2 einstückig verbunden, in deren Inneres die Leiterplatte 5 teilweise hineinreicht; diese Bauteileinheit ist in aus der EP 0 616 659 B1 an sich bekannter Art zwischen den axial voreinander liegenden Stirnseiten des Motorgehäuses eines Kommutatormotors einerseits und eines Getriebegehäuses eines Schneckengetriebes andererseits derart angeordnet, dass im Bereich des Kommutators die Bürstentraganordnung durch Motorgehäuse und Getriebegehäuse nach außen umschließbar und das die Steuerelektronik aufnehmende Gehäuse 1 durch einen auf seinen Gehäuse-Topfrand auflegbaren getriebeseitigen Gehäusedeckel 6 dicht verschließbar ist. Zum dichten Abschluss der dazu aufeinanderliegenden Bauteile ist eine einstückige randseitig auf das Gehäuse aufgespritzte Dichtungsauflage 2.2 einer Dichtung 2 vorgesehen.

Zur Kontaktierung zwischen der Leiterplatte 5 und damit der in dem Hohlraum des Gehäuses 1 aufgenommenen Steuerelektronik einerseits und einem äußeren Versorgungsanschluss andererseits dienen in einen flexiblen Leiterbahnträger 3 eingebettete Leiterbahnen 3.1, die mit gehäuseinneren, in die Kontaktebene der Leiterplatte 5 abgewinkelten Kontaktstellen an die Leiterplatte 5 anschließbar sind und mit gehäuseäußeren Kontaktstellen z.B. zu einem hier nicht gezeigten kundenseitigen Steckeranschluss führen.

Zur dichten elektrischen Leitungsführung der Leiterbahnen 3.1 vom Inneren des Gehäuses 1 zu dessen Äußerem dient eine gesonderte, außerhalb des Bereichs der Dichtungsauflage 2.2 vorgesehene Durchführungs-Öffnung 1.1 in der Bodenfläche des topfförmigen Gehäuses 1 und in Nähe dessen einer Gehäuse-Seitenwand; in diese Durchführungs-Öffnung 1.1 ist der durchgesteckte flexible Leiterbahnträger 3 mit den darin nach Art eines Folienleiters eingebetteten Leiterbahnen 3.1 mit einer Leiterbahnträger-Dichtung 2.1 aus einem Thermoplast oder dergleichen eingespritzt.

Nach einer Ausgestaltung der Erfindung ist der Leiterbahnträger 3 mit den eingebetteten, insbesondere eingespritzten, Leiterbahnen 3.1 innerhalb des Gehäuses 1 entlang der einen, der Durchführungs-Öffnung 1.1 nahen Gehäuseseitenwand mittels einer Dichtungs-Erweiterung 2.3 durch Anspritzen bis zu seinem abwinkelbaren Kontaktierungsende mit der Leiterplatte 5 geführt gehalten. Zweckmäßigerweise sind die Leierbahnträger-Dichtung 2.1 und die randseitigen Dichtungs-Auflage 2.2 sowie gegebenenfalls die Dichtungs-Erweiterung 2.3 in einem Arbeitsgang als einstückige Dichtung 2 spritzgegossen.

Ein vorteilhaftes Verfahren zur Herstellung der erfindungsgemäßen Leitungsdurchführung ist durch folgende Verfahrensschritte gekennzeichnet:
- Herstellen, insbesondere Spritzen, des Gehäuses mit der eigenen, zur Durchführung des Leiterbahnträgers vorgesehenen Durchführungs-Öffnung und gegebenenfalls der durch den Gehäusedeckel unter Zwischenlage einer Dichtungs-Auflage verschließbaren Gehäuseöffnung;
- Durchstecken des Leiterbahnträgers durch die Durchführungs-Öffnung des Gehäuses;
- Spritzen der Leiterbahnträger-Dichtung als Umspritzung der Leiterbahnen und Anspritzung an das Gehäuse im Bereich des Gehäuserandes der Durchführungs-Öffnung sowie der Dichtungsauflage an das Gehäuse im Bereich seines zur Auflage des Gehäusedeckels vorgesehenen Gehäuserandes.

Zusammenfassend ist festzustellen: Zur Minderung des Material- und Fertigungsaufwandes für eine dichte elektrische Leitungsdurchführung durch die Wandung eines Gehäuses 1 sind elektrische Leiterbahnen 3.1 in einem flexiblen Leiterbahnträger 3 aus Polyster eingebettet; der Leiterbahnträger 3 ist über eine Leiterbahnträger-Dichtung 2 aus einem Thermoplast in einer eigenen Durchführungs-Öffnung 1.1 in der Wandung des aus einem Polyamid gefertigten Gehäuses 1 eingespritzt.

## Patentansprüche

1. Dichte elektrische Leitungsdurchführung durch die Wand eines Gehäuses (1) mit den Merkmalen:
- elektrische Leiterbahnen (3.1) sind nach Art eines Folienleiters in einen flexiblen Leiterbahnträger (3) aus einem Polyester bzw. einem, insbesondere hinsichtlich seiner Temperaturbelastung, äquivalenten Werkstoff isoliert eingebettet, vorzugsweise eingepritzt;
- der Leiterbahnträger (3) ist durch eine eigene Durchführungs-Öffnung (1.1) des Gehäuses (1) abgedichtet durchgeführt;
- zur Abdichtung ist eine einerseits dicht an dem Leiterbahnträger (3) und andererseits an dem Gehäuserand der Durchführungs-Öffnung (1.1) anliegende Leiterbahnträger-Dichtung (2) aus einem Thermoplast bzw. einem, insbesondere hinsichtlich seiner Temperaturbelastung, äquivalenten Werkstoff vorgesehen.

2. Dichte elektrische Leitungsdurchführung nach Anspruch 1 mit dem Merkmal:
- Die Leiterbahnträger-Dichtung (2) ist zwischen dem durch die Durchführungs-Öffnung (1.1) des Gehäuses (1) gesteckten Leiterbahnträger (3) und dem Gehäuserand der Durchführungs-Öffnung (1.1) eingespritzt.

3. Dichte elektrische Leitungsdurchführung nach Anspruch 1 und/oder 2 mit dem Merkmal:
- die Leiterbahnträger-Dichtung (2.1) ist um die Leiterbahnen (3.1) umspritzt und an das Gehäuse (1) im Bereich des Gehäuse-Randes der Durchführungs-Öffnung (1.1) angespritzt.

4. Dichte elektrische Leitungsführung nach zumindest einem der Ansprüche 1-3 mit einem das Gehäuse (1) unter Zwischenlage einer Dichtungs-Auflage (2.2) abschließenden Gehäusedeckel (6) mit dem Merkmal:
- die Durchführungs-Öffnung (1.1) zur Durchführung des Leiterbahnträgers (3) liegt außerhalb des Bereichs der Dichtungsauflage (2.2) zwischen dem Gehäuse (1) und dem Gehäusedeckel.

5. Dichte elektrische Leitungsdurchführung nach zumindest einem der Ansprüche 1-4 mit dem Merkmal:
- der Leiterbahnträger (3) ist in dem Gehäuse (1) auch außerhalb seiner eigenen Durchführungs-Öffnung (1.1) über eine entsprechende, insbesondere angespritzte, Dichtungs-Erweiterung (2.3) gegenüber dem Gehäuse (1) fixiert.

6. Dichte elektrische Leitungsdurchführung nach Anspruch 4 und/oder 5 mit dem Merkmal:
- die Leiterbahnträger-Dichtung (2.1) und die Dichtungs-Auflage (2.2) sowie gegebenenfalls die Dichtungs-Erweiterung (2.3) sind Bestandteil einer einstückig um- bzw. angespritzten Dichtung (2) aus einem Thermoplast oder einem, insbesondere hinsichtlich seiner Wärmebelastbarkeit, äquivalenten Material.

7. Verfahren zur Herstellung einer dichten elektrischen Leitungsdurchführung nach zumindest einem der Ansprüche 1-6 mit folgenden Verfahrensschritten:
- Herstellen, insbesondere Spritzen, des Gehäuses mit der eigenen, zur Durchführung des Leiterbahnträgers vorgesehenen Durchführungs-Öffnung und gegebenenfalls der durch den Gehäusedeckel unter Zwischenlage einer Dichtungs-Auflage verschließbaren Gehäuseöffnung;
- Durchstecken des Leiterbahnträgers durch die Durchführungs-Öffnung des Gehäuses;
- Spritzen der Leiterbahnträger-Dichtung als Umspritzung der Leiterbahnen und Anspritzung an das Gehäuse im Bereich des Gehäuserandes der Durchführungs-Öffnung sowie der Dichtungsauflage an das Gehäuse im Bereich seines zur Auflage des Gehäusedeckels vorgesehenen Gehäuserandes.

## Geänderte Patentansprüche

### Geänderte Patentansprüche gemäss Regel 86(2) EPÜ.

1. Dichte elektrische Leitungsdurchführung durch die Wand eines Gehäuses (1) mit den Merkmalen:
- elektrische Leiterbahnen (3.1) sind nach Art eines Folienleiters in einen flexiblen Leiterbahnträger (3) aus einem Polyester bzw. einem, insbesondere hinsichtlich seiner Temperaturbelastung, äquivalenten Werkstoff isoliert eingebettet, vorzugsweise eingespritzt;
- der Leiterbahnträger (3) ist durch eine eigene Durchführungs-Öffnung (1.1) des Gehäuses (1) abgedichtet durchgeführt;
- zur Abdichtung zwischen dem Gehäuse (1) und dem durchgesteckten Leiterbahnträger (3) ist eine einerseits dicht an dem Leiterbahnträger (3) und andererseits an dem Gehäuserand der Durchführungs-Öffnung (1.1) anliegende an- bzw. eingespritzte Leiterbahnträger-Dichtung (2) aus einem Thermoplast bzw. einem, insbesondere hinsichtlich seiner Temperaturbelastung, äquivalenten Werkstoff vorgesehen.
